# EUROPEAN PATENT APPLICATION

(11) **EP 2 644 576 A1**
(43) Date of publication of application: **02.10.2013**
(21) Application number: 12161835.9
(22) Date of filing: 28.03.2012
(51) Int. Cl.: C03B 23/025

(54) **Mould construction for bending glass sheets**

(71) Applicant: Glaston Services Ltd. Oy, 33730 Tampere (FI)
(72) Inventor: Yli-Vakkuri, Erkki, 36660 Laitikkala (FI); Niemioja, Jussi, 36200 Kangasala (FI); Kylväjä, Harri, 33960 Pirkkala (FI)
(74) Representative: LEITZINGER OY

(57) **Abstract**

The object of the invention is a mould construction for bending glass sheets. The mould construction comprises a framework (1) and support plates (2) on vertical planes, the curvature of the upper edge of the plates essentially corresponding to the desired bending curvature of the glass sheet. On the upper edges of the support plates (2) are slots (3) and pipes (4) forming the mould surface are positioned in the slots (3). The slots (3) are dimensioned with play with respect to the pipes, but to lock the upward movement of the pipes (4) from the slots (3). The support plates (2) are supported on the framework (1) in such a way that one end of the mould surface is lower than the other end. At the lower end of the mould surface the support plates (2) are provided with end stoppers (5). The difference in height, that is, the inclination of the mould surface, is dimensioned so as to effect the resting of the edge of the glass sheet placed on the mould against the end stoppers (5) during the bending stage.

## Description

The object of the invention is a mould construction for bending glass sheets, the said mould construction comprising
- a fra mework
- support plates on vertical planes, the curvature of the upper edge of the plates essentially corresponding to the desired bending curvature of the glass sheet
- slots on the upper edges of the support plates
- pipes forming the mould surface which are positioned in the said slots.

This type of mould construction is known from the patent publication WO 9003336 A1.

When bending glass sheets for the mirrors of solar power plants, accurate control of form presents a problem. The problem is emphasised especially in connection with tempering or heat strengthening if the glass sheet has to be overheated with respect to the bending temperature. In the mirrors of solar power plants, the radiation has to be directed at even smaller collection pipes than before in order to obtain a higher temperature.

The aim of the invention is to develop the mould construction mentioned above further so as to achieve accurate control of form by means of it.

This aim is achieved with the invention, by means of the characteristics disclosed in the appended claim 1. Preferred embodiments of the invention are disclosed in the dependent claims.

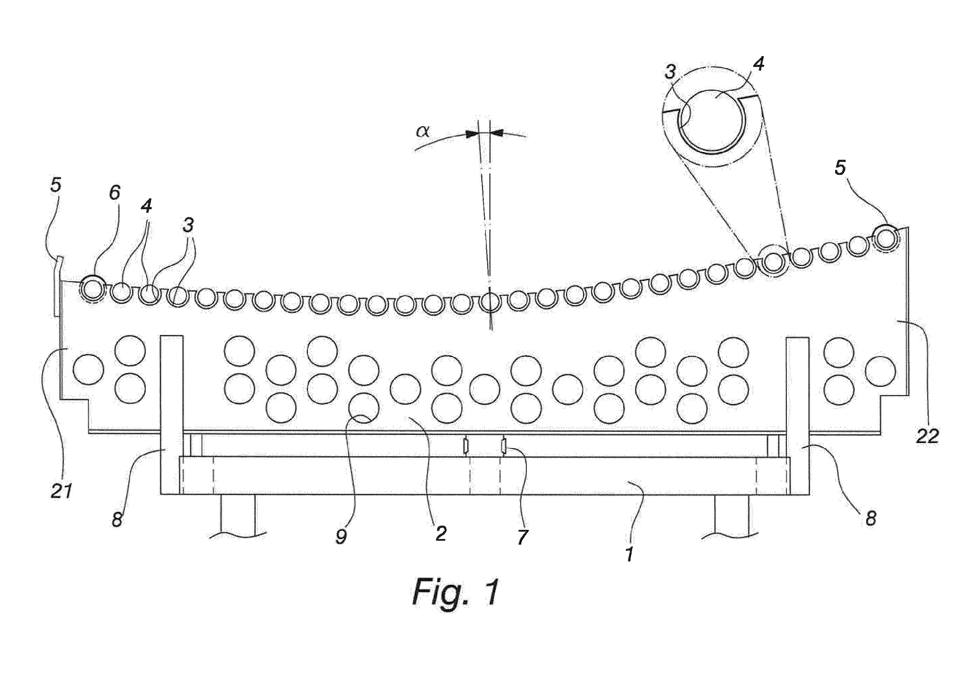

One embodiment of the invention is described in greater detail in the following, with reference to the appended drawing, in which
- Figure 1: shows a side view of the mould construction according to the invention.

The described mould construction comprises a framework 1 made of structural steel on which are supported support plates 2 on vertical planes. There are several, for example 5, support plates 2 at a horizontal distance from one another. The support plates are parallel with one another. The curvature of the upper edge of the support plates 2 corresponds essentially to the desired bending curvature of the glass sheet. The upper edges of the support plates 2 comprise slots 3, in which are placed pipes 4, which form the mould surface. If necessary, there may be a non-woven mat or non-woven fabric on the pipes 4 for forming a uniform mould surface. The support plates 2 and pipes 4 are made of stainless or acid-proof steel.

The slots 3 are dimensioned to receive the pipes 4 with play but, however, in such a way that the upward movement of the pipes 4 from the slots 3 is prevented. The lengthening and shortening of the pipes due to the varying temperature will thus not affect the shape of the support surface. At the manufacturing stage, the pipes 4 are pushed in their longitudinal direction through the slots 3 of all support plates 2. During use, the pipes are free to expand by heat and will not warp. In Figure 1, for the sake of clarity, the pipes 4 and the slots 3 are shown on a relatively larger scale than in the real construction, where also the number of pipes 4 is about double that shown in the Figure. The diameter of the pipes 4 is between 15-25 mm and the gap between the pipes is between 4-8 mm. The wall thickness of the pipes 4 is 0.5-0.8 mm, that is, the pipes are relatively ductile and flexible. For this reason, there are at least four or five support plates 2 divided over the length of the pipes.

The support plates 2 are supported on the framework in such a way that one end of the mould surface is lower than the other end. In the embodiment shown this is implemented in such a way that the support plates 2 are higher at one end 22 than the other end 21. In that case, the central axis of the parabola drawn through the centres of the slots 3 in the row of slots is correspondingly tilted, that is, deviates from the vertical plane towards the lower end 21 by angle a. The support plates 2 at the lower end of the mould surface are provided with end stoppers 5 and the said difference in height, that is, the inclination of the mould surface is dimensioned so as to effect the resting of the edge of the glass sheet placed on the mould against the end stoppers 5 during the bending stage. The advantage of this construction is that the static friction between the glass sheet placed on the mould and the mould surface is converted into sliding friction evenly throughout and the glass sheet rests against the stoppers 5 all the time at the same point of the mould. Around the pipe 4 at the opposite end of the mould with respect to the end stoppers 5 is preferably a rotating, tubular non-woven metal fibre fabric 6 which facilitates the sliding of the other end of the glass sheet during bending. At the other end is preferably also a metal fibre pipe 6 around the pipe 4.

The support plates 2 are fixed by their central area to the framework 1 by fasteners 7 which allow vertical movement but prevent horizontal movement. The framework 1 comprises slot-like supports 8 for supporting the ends of the support plates 2 against lateral inclination, but slidingly in its longitudinal direction. This arrangement together with the loose fitting of the pipes 4 ensures that the support plates 2 will not warp as a result of thermal expansion. The support plates 2 are, in addition, perforated in such a way that the proportion of the holes 9 is at least 25%, preferably more than 30%, of the surface area of the support plates 2. This lightens the structure and makes possible the circulation of air below the mould surface.

When the mould is built on the framework without fixed joints, the manufacture becomes repeatable and only assembly needs to be carried out on site.

## Claims

1. A mould construction for bending glass sheets, the said mould construction comprising
- a framework (1)
- support plates (2) on vertical planes, the curvature of the upper edge of the plates essentially corresponding to the desired bending curvature of the glass sheet
- slots (3) on the upper edges of the support plates (2)
- pipes (4) forming the mould surface which are positioned in the said slots (3),
**characterised in that** the slots (3) are dimensioned with play with respect to the pipes, but to lock the upward movement of the pipes (4) from the slots (3), that the support plates (2) are supported on the framework (1) in such a way that one end of the mould surface is lower than the other end, that at the lower end of the mould surface the support plates (2) are provided with end stoppers (5), and that the said difference in height, that is, the inclination of the mould surface, is dimensioned so as to effect the resting of the edge of the glass sheet placed on the mould against the end stoppers (5) during the bending stage.

2. A mould construction as claimed in claim 1, **characterised in that** around the pipe (4) at the opposite end of the mould with respect to the end stoppers (5) is preferably a rotating, tubular non-woven metal fibre fabric (6).

3. A mould construction as claimed in claim 1 or 2, **characterised in that** the support plates (2) are fixed by their central area to the framework (1) and that the framework (1) comprises supports (8) for supporting the ends of the support plates (2) against lateral inclination and slidingly in their longitudinal direction.

4. A mould construction as claimed in any of the claims 1 to 3, **characterised in that** the support plates (2) are provided with holes (9) in such a way that the proportion of the holes (9) is at least 25% of the surface area of the support plates (2).

5. A mould construction as claimed in any of the claims 1 to 4, **characterised in that** the framework (1) is made of structural steel and the support plates (2) and pipes (4) are made of stainless or acid-proof steel.

6. A mould construction as claimed in any of the claims 1 to 5, **characterised in that** on the pipes (4) is a non-woven mat or non-woven fabric forming a uniform mould surface.

7. A mould construction as claimed in any of the claims 1 to 6, **characterised in that** the support plates (2) are higher at one end (22) than the other end (21) and the central axis of the parabola drawn through the centres of the slots (3) in the row of slots is correspondingly tilted, that is, deviates from the vertical plane towards the lower end (21).

8. A mould construction as claimed in any of the claims 1 to 7, **characterised in that** the outer diameter of the pipes (4) is between 15-25 mm and the gaps between the pipes are between 4-8 mm.

9. A mould construction as claimed in claim 8, **characterised in that** the wall thickness of the pipes (4) is 0.5-0.8 mm and there are at least four support plates (2) divided over the length of the pipe.

10. A mould construction as claimed in any of the claims 1 to 8, **characterised in that** the mould is built on the framework (1) without fixed joints.
